(19) Europäisches Patentamt
European Patent Office
Office européen des brevets

(11) **EP 4 712 245 A1**

(12) **EUROPEAN PATENT APPLICATION**

(43) Date of publication:
**18.03.2026 Bulletin 2026/12**

(21) Application number: 25195899.7

(22) Date of filing: **08.07.2022**

(51) International Patent Classification (IPC):
*H01M 50/358* (2021.01)    *H01M 50/383* (2021.01)
*H01M 50/249* (2021.01)    *H01M 10/6566* (2014.01)
*H01M 10/613* (2014.01)    *H01M 10/625* (2014.01)
*H01M 50/367* (2021.01)    *H01M 50/211* (2021.01)

(52) Cooperative Patent Classification (CPC):
**H01M 50/211; H01M 10/613; H01M 10/625;
H01M 10/6566; H01M 50/249; H01M 50/358;
H01M 50/367;** H01M 2220/20; Y02E 60/10

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.07.2021 KR 20210090554**

(62) Document number(s) of the earlier application(s) in
accordance with Art. 76 EPC:
**22838062.2 / 4 277 000**

(71) Applicant: **LG Energy Solution, Ltd.
Seoul 07335 (KR)**

(72) Inventors:
• **KIM, Kwang-Mo
34122 Daejeon (KR)**
• **SEONG, Jun-Yeob
34122 Daejeon (KR)**
• **JUNG, Hye-Mi
34122 Daejeon (KR)**

(74) Representative: **Goddar, Heinz J.
Boehmert & Boehmert
Anwaltspartnerschaft mbB
Pettenkoferstrasse 22
80336 München (DE)**

Remarks:
This application was filed on 14.08.2025 as a
divisional application to the application mentioned
under INID code 62.

(54) **BATTERY MODULE AND BATTERY PACK WITH REINFORCED SAFETY**

(57)    Disclosed is a battery module with an improved safety by appropriately controlling venting when a thermal event occurs inside the battery module. The battery module includes a cell assembly having at least one battery cell; a module case configured to accommodate the cell assembly in an inner space thereof and having a venting hole formed therein to discharge a venting gas generated from the cell assembly; and a venting unit provided at an outer side of the module case and having a venting channel so that the venting gas discharged from the venting hole is introduced therein and discharged to the outside, the venting unit having a protrusion configured to protrude toward an outer surface of the module case from the inside of the venting channel.

FIG. 1

EP 4 712 245 A1

**Description**

TECHNICAL FIELD

The present application claims priority to Korean Patent Application No. 10-2021-0090554 filed on July 9, 2021 in the Republic of Korea, the disclosures of which are incorporated herein by reference.

The present disclosure relates to a battery, and more particularly, to a battery module and a battery pack with reinforced safety, and a vehicle including the same.

BACKGROUND ART

As the demand for portable electronic products such as notebook computers, video cameras and portable telephones is rapidly increasing and robots and electric vehicles are commercialized in earnest, high-performance secondary batteries capable of repeated charging and discharging are being actively researched.

Currently commercialized secondary batteries include nickel cadmium battery, nickel hydrogen battery, nickel zinc battery, lithium secondary battery, and so on. Among these, the lithium secondary battery has almost no memory effect to ensure free charge and discharge, compared to the nickel-based secondary battery, and the lithium secondary battery is spotlighted due to a very low discharge rate and a high energy density.

The lithium secondary battery mainly uses a lithium-based oxides and a carbon material as a positive electrode active material and a negative electrode active material, respectively. The lithium secondary battery includes an electrode assembly in which a positive electrode plate and a negative electrode plate respectively coated with the positive electrode active material and the negative electrode active material are disposed with a separator being interposed therebetween, and an exterior, or a battery case, for hermetically accommodating the electrode assembly together with an electrolyte.

Generally, the lithium secondary batteries may be classified into a can-type secondary battery having an electrode assembly included in a metal can and a pouch-type secondary battery having an electrode assembly included in a pouch of an aluminum laminate sheet, depending on the shape of the exterior.

Recently, secondary batteries are widely used for driving or energy storage not only in small devices such as portable electronic devices but also in medium and large devices such as electric vehicles and energy storage systems (ESS). These secondary batteries may constitute one battery module in such a form that a plurality of secondary batteries are electrically connected and are stored together in a module case. In addition, a plurality of battery modules may be connected to form one battery pack.

However, when a plurality of battery modules are included in the battery pack as described above, this structure may be vulnerable to a thermal chain reaction between the battery modules. For example, when an event such as a thermal runaway occurs inside one battery module, propagation of the thermal runaway to other battery modules needs to be suppressed. If the propagation of thermal runaway between battery modules is not suppressed, the event occurring in a specific battery module causes a chain reaction of several battery modules, which may cause an explosion or fire or increase the scale.

In particular, when an event such as thermal runaway occurs in any one battery module, gas or flame may be discharged to the outside. At this time, if the emission of gas or flame is not properly controlled, the gas or flame may discharged toward other battery modules, which may cause a thermal chain reaction of others battery modules. Moreover, when a thermal event occurs inside the battery module, factors that may cause ignition, such as sparks, electrode discharges, and carbides, may be generated together with a large amount of combustible gas. In addition, when the ignition-inducing factors are discharged together when the gas is discharged, they may come into contact with oxygen and cause a fire.

DISCLOSURE

Technical Problem

The present disclosure is designed to solve the problems of the related art, and therefore the present disclosure is directed to providing a battery module with an improved structure to improve safety by appropriately controlling the discharge of gas or spark when a thermal event occurs inside the battery module, and a battery pack and a vehicle including the battery module.

However, the technical problem to be solved by the present disclosure is not limited to the above, and other problems not mentioned herein will be clearly understood by those skilled in the art from the following disclosure.

Technical Solution

In one aspect of the present disclosure, there is provided a battery module, comprising: a cell assembly having at least one battery cell; a module case configured to accommodate the cell assembly in an inner space thereof and having a venting hole formed therein to discharge a venting gas generated from the cell assembly; and a venting unit provided at an outer side of the module case and having a venting channel so that the venting gas discharged from the venting hole is introduced therein and discharged to the outside, the venting unit having a protrusion configured to protrude toward an outer surface of the module case from the inside of the venting channel.

Here, a plurality of protrusions may be arranged along a flow direction of the venting gas.

In addition, the venting unit may further include a plate portion formed in a plate shape so that the protrusion is located on an inner surface thereof, and a rim portion protruding from a rim of the plate portion toward the outer surface of the module case and coupled to the outer surface of the module case.

In addition, the protrusion may be configured such that the width in the same direction as a flow direction of the venting gas is greater than or equal to the width in a direction orthogonal to the flow direction of the venting gas.

In addition, the venting unit may have an empty space formed inside the protrusion.

In addition, the venting unit may be configured such that the outer surface of a portion where the protrusion is formed is concave toward the outer surface of the module case.

In addition, the venting unit may have a projection or groove formed on the surface of the protrusion.

In addition, the venting unit may further include an adhesive member having a material with an adhesive property and positioned on an inner surface of the venting channel.

In addition, the protrusion may be configured to have a width that gradually increases toward an inner end.

In another aspect of the present disclosure, there is also provided a battery pack, comprising the battery module according to the present disclosure.

In another aspect of the present disclosure, there is also provided a battery pack, comprising: at least one battery module; a pack housing configured to accommodate the at least one battery module in an inner space thereof and having a pack hole formed therein; and a venting unit mounted to the pack housing and having a venting channel so that a venting gas discharged from the pack hole is introduced therein and discharged to the outside, the venting unit having a protrusion configured to protrude toward an outer surface of the pack housing from the inside of the venting channel.

In still another aspect of the present disclosure, there is also provided a vehicle, comprising the battery module according to the present disclosure.

Advantageous Effects

According to the present disclosure, when a thermal event occurs inside a specific battery module or battery pack, gas and heat may be quickly discharged to the outside, and the occurrence or spread of fire may be suppressed.

In particular, according to an embodiment of the present disclosure, since the discharge path of the venting gas is formed non-linearly, the gas and heat may be rapidly discharged, and the discharge of sparks, electrode discharges, carbides, or the like with strong straightness to the outside of the module may be suppressed.

Therefore, in this case, it is possible to prevent a fire from occurring outside the battery module by suppressing a material such as sparks or electrode discharge, which may be an ignition factor, from coming into contact with oxygen outside the module.

In addition, according to an embodiment of the present disclosure, even if a flame occurs inside the battery module, the generated flame is suppressed from being discharged to the outside of the battery module, thereby preventing the thermal event from spreading to other battery modules.

In addition, according to an embodiment of the present disclosure, with a simple structure, the effect of controlling venting of the battery module and preventing heat/flame propagation between battery modules may be implemented.

The present disclosure may have various other effects in addition to the above, and such effects will be described in each embodiment, or any effect that can be easily inferred by those skilled in the art will not be described in detail.

DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.

FIG. 1 is an assembled perspective view schematically showing a battery module according to an embodiment of the present disclosure.

FIG. 2 is an exploded perspective view showing some components of FIG. 1.

FIG. 3 is a perspective view schematically showing the configuration of a venting unit according to an embodiment of the present disclosure.

FIG. 4 is a schematic view of the cross-sectional configuration of the venting unit of FIG. 3 attached to a module case, as viewed from the front.

FIG. 5 is an enlarged view showing the configuration of a portion where a protrusion is formed in the venting unit according to an embodiment of the present disclosure.

FIG. 6 is a sectional view schematically showing a partial configuration of the venting unit according to an embodiment of the present disclosure.

FIG. 7 is a sectional view schematically showing a partial configuration of a venting unit according to another embodiment of the present disclosure.

FIG. 8 is a cross-sectional view showing the configuration of the venting unit of FIG. 7 attached to the module case, as viewed from the top.

FIG. 9 is a top cross-sectional view schematically showing the configuration of a protrusion according to another embodiment of the present disclosure.

FIG. 10 is a front view schematically showing a partial configuration of a venting unit having a protrusion form according to still another embodiment of the present disclosure.

FIG. 11 is a cross-sectional view, taken along the line B1-B1', as viewed from the top, in a state where the venting unit of FIG. 10 is coupled to the module case.

FIG. 12 is a top cross-sectional view schematically showing a partial configuration in which a venting unit according to still another embodiment of the present disclosure is coupled to the module case.

FIG. 13 is a top cross-sectional view schematically showing a partial configuration in which a venting unit according to still another embodiment of the present disclosure is coupled to the module case.

FIG. 14 is a top cross-sectional view schematically showing a partial configuration in which a venting unit according to still another embodiment of the present disclosure is coupled to the module case.

FIGS. 15 and 16 are perspective views schematically showing the configuration of venting units according to other various embodiments of the present disclosure.

FIG. 17 is a perspective view schematically showing the configuration of a battery module according to another embodiment of the present disclosure.

FIG. 18 is a perspective view schematically showing the configuration of a battery module according to still another embodiment of the present disclosure.

FIG. 19 is a diagram schematically showing a battery pack according to an embodiment of the present disclosure, as viewed from the top.

FIG. 20 is a diagram showing a battery pack according to another embodiment of the present disclosure, as viewed from the top.

BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

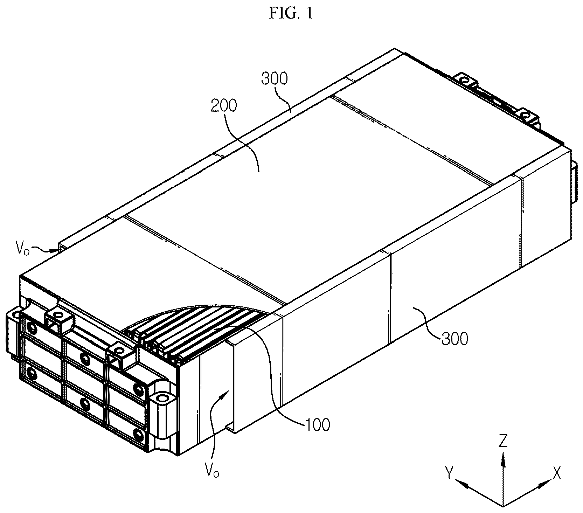

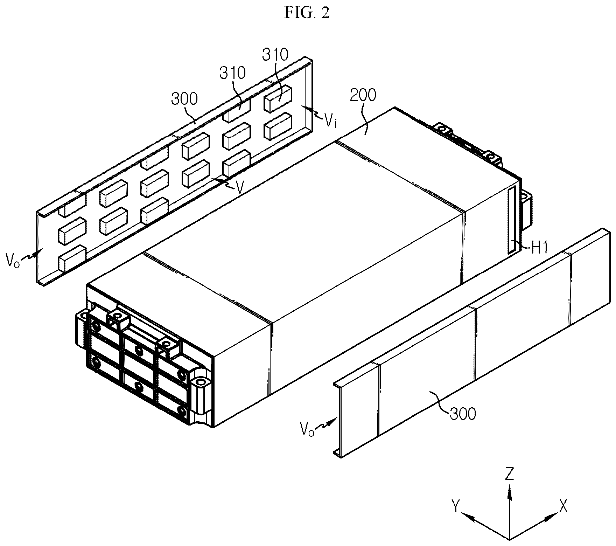

FIG. 1 is an assembled perspective view schematically showing a battery module according to an embodiment of the present disclosure, and FIG. 2 is an exploded perspective view showing some components of FIG. 1.

Referring to FIGS. 1 and 2, the battery module according to the present disclosure includes a cell assembly 100, a module case 200, and a venting unit 300.

The cell assembly 100 may include at least one battery cell. Here, each battery cell may refer to a secondary battery. The secondary battery may include an electrode assembly, an electrolyte and a battery case. In particular, the battery cell provided in the cell assembly 100 may be a pouch-type secondary battery. However, other types of secondary batteries, such as a cylindrical battery or a rectangular battery, may also be employed in the cell assembly 100 of the present disclosure.

A plurality of secondary batteries may form the cell assembly 100 in a stacked form. For example, the plurality of secondary batteries may be stacked so as to be arranged in a horizontal direction (x-axis direction in the drawing) while being erect in an upper and lower direction (z-axis direction in the drawing), respectively. Each battery cell may include electrode leads, and the electrode leads may be located at both ends or at one end of each battery cell. A secondary battery in which the electrode leads protrude in both directions may be called a bidirectional cell, and a secondary battery in which the electrode leads protrude in one direction may be called a unidirectional cell. The present disclosure is not limited by the specific type or form of these secondary batteries, and various types of secondary batteries known at the time of filing of this application may be employed in the cell assembly 100 of the present disclosure.

The module case 200 may have an empty space formed therein and be configured to accommodate the cell assembly 100 in the inner space. For example, the module case 200 may be configured to include an upper plate, a lower plate, a left plate, a right plate, a front plate and a rear plate to define the inner space. Here, at least two or more of the upper plate, the lower plate, the left plate, the right plate, the front plate, and the rear plate may be configured in an integrated form. More specifically, the module case 200 may be configured in a mono-frame shape having a tube shape, in which the upper plate, the lower plate, the left plate and the right plate are integrally formed. In addition, the front and rear plates may be coupled to the front and rear openings of the mono-frame and configured to seal.

The module case 200 may have a venting hole formed in at least one side thereof, as indicated by H1 in FIG. 2. For example, the venting hole H1 may be formed in the left plate and the right plate of the module case 200, respectively. The venting hole H1 may be configured such that, when a venting gas is generated and ejected from the cell assembly 100 accommodated in the inner space, the generated venting gas may be discharged to the outer space of the module case 200. For example, the venting hole H1 may be formed in a completely open form so as to penetrate the module case 200 in an inner and outer direction. However, the venting hole H1 may not be completely opened, but may be configured to be closed in a normal state and be opened according to the change in pressure or temperature. Also, the venting hole H1 may be formed to be elongated in one direction. For example, as shown in FIG. 2, the venting hole H1 may be formed to be elongated in the upper and lower direction. In addition, the venting hole H1 may be formed in the side surface of the module case 200, particularly in the left surface and the right surface. However, the venting hole H1 may be formed in other parts of the module case 200, for example the upper surface, the lower surface, the front surface and/or the rear surface. In addition, the venting hole H1 formed in the module case 200 may be configured in various shapes other than the above shape.

The venting unit 300 may be provided at an outer side of the module case 200. In particular, the venting unit 300 may be attached to a portion of the module case 200 where the venting hole H1 is formed. For example, as shown in FIG. 2, when the venting hole H1 is formed in the left surface and the right surface of the module case 200, the venting unit 300 may be attached to the outer side of each of the left surface and the right surface of the module case 200.

In addition, like the portion indicated by V in FIG. 2, a venting channel may be formed in the venting unit 300. The venting channel V may be configured such that the venting gas discharged from the venting hole H1 of the module case 200 is introduced therein and discharged to the outside.

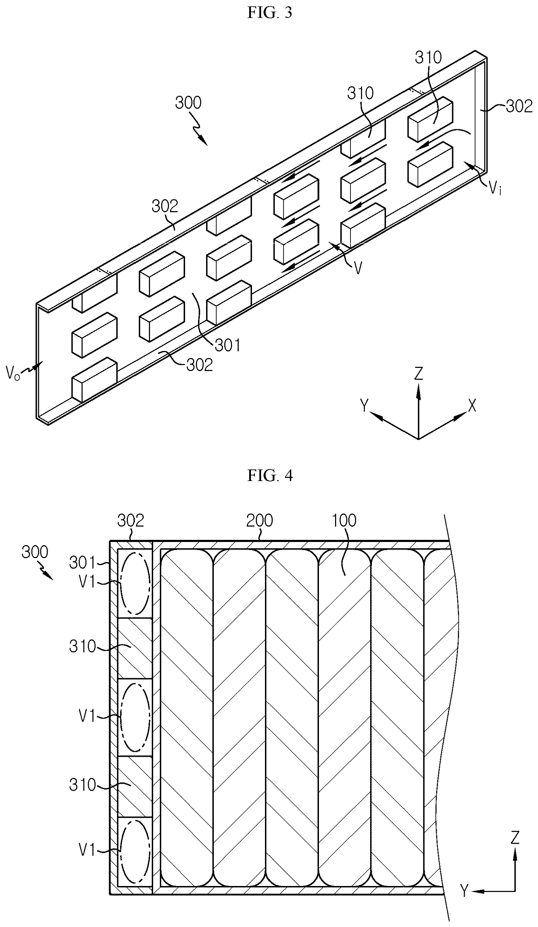

The configuration of this venting unit 300 will be described in more detail with reference to FIGS. 3 and 4.

FIG. 3 is a perspective view schematically showing the configuration of the venting unit 300 according to an embodiment of the present disclosure, and FIG. 4 is a schematic view of the cross-sectional configuration of the venting unit 300 of FIG. 3 attached to the module case 200, as viewed from the front. For example, the venting unit 300 of FIGS. 3 and 4 may be regarded as being depicted based on the venting unit 300 located at the left side of the module case 200 among the two venting units 300 shown in FIGS. 1 and 2.

Referring to FIGS. 1 to 4, the venting unit 300 may have a venting channel V formed so that the venting gas discharged from the venting hole H1 is introduced therein and discharged to the outside. In particular, the venting unit 300 may have a protrusion 310 inside the venting channel V. The protrusion 310 may be configured to protrude from the inside of the venting channel V toward the outer surface of the module case 200. For example, based on FIG. 4, the venting unit 300 attached to the left surface of the module case 200 includes the protrusion 310 on the right surface, which can be called the inner surface, and the protrusion 310 may be formed to protrude in a right direction.

According to this configuration of the present disclosure, the venting gas may flow in a bent form by the protrusion 310. That is, when the venting gas is introduced into the venting channel V of the venting unit 300 from the venting hole H1 of the module case 200, the venting gas may flow inside the venting channel V and be discharged to the outside through the discharge hole Vo of the venting channel V. At this time, when the venting gas flows in the inner space of the venting channel V, the venting gas may collide with the protrusion 310, so that the venting gas cannot flow only in a straight direction and the flow direction may be bent at a predetermined portion. Accordingly, when the venting gas flows in the venting channel V, the venting gas may flow in a bent form at least once or more, as indicated by the arrow in FIG. 3. In other words, the venting unit 300 may be regarded as being configured so that the venting gas flows non-linearly by the protrusion 310.

According to this embodiment of the present disclosure, since the flow direction of the venting gas is formed in a non-linear form, it is possible to effectively suppress sparks, electrode discharges, carbides, or the like with strong straightness from being discharged to the outside of the venting unit 300 together with the venting gas. Therefore, in this case, a problem that high-temperature sparks, electrode discharges, carbides, or the like come into contact with oxygen outside the venting unit 300 and act as an ignition source may be prevented.

Meanwhile, in this specification, regarding the inner side and the outer side, unless otherwise specified, the inner side may mean a portion facing the center of the battery module, and the outer side may mean its opposite direction. For example, the inner direction of the venting unit 300 may mean a direction toward the module case 200.

The protrusion 310 may be configured to contact the outer surface of the module case 200. For example, referring to FIG. 4, the venting unit 300 attached to the left side of the module case 200 may be configured such that the right end of the protrusion 310 contacts the left surface of the module case 200.

According to this configuration of the present disclosure, an empty space may not be formed between the protrusion 310 and the module case 200. Accordingly, the empty space through which the venting gas can flow in the venting channel V may be limited to the space between the protrusions 310 as indicated by V1 in FIG. 4. Therefore, in this case, the flow direction of the venting gas in the venting channel V may be configured in a non-linear shape, namely in a bent shape, more easily and reliably.

A plurality of protrusions 310 may be arranged along the flow direction of the venting gas. Here, the flow direction of the venting gas may be a direction from the venting hole H1 toward the discharge hole Vo of the venting unit 300. For example, referring to FIG. 3, the flow direction of the venting gas may be referred to as a -X-axis direction. In this case, a plurality of protrusions 310 are provided on the right surface of the left venting unit 300, and in particular, several protrusions 310 may be arranged in the - X-axis direction. Moreover, the plurality of protrusions 310 arranged along the flow direction of the venting gas may be configured to be spaced apart from each other by a predetermined distance. In addition, by this separated space, the venting gas may flow. In addition, the plurality of protrusions 310 may be alternately arranged along the flow direction of the venting gas. For example, in the case of the venting unit 300 coupled to the left side and the right side of the module case 200, a plurality of protrusions 310 may be disposed in the front and rear directions, respectively, and the adjacent protrusions 310 may be configured to be located at different heights.

According to this embodiment of the present disclosure, since a plurality of protrusions 310 are disposed along the flow direction of the venting gas, it is possible to more easily implement a configuration in which the flow direction of the venting gas is bent several times.

In addition, a plurality of protrusions 310 may be arranged along a direction orthogonal to the flow direction of the venting gas. For example, referring to FIGS. 3 and 4, the direction orthogonal to the flow direction of the venting gas may be referred to as a vertical direction (Z-axis direction). In this case, a plurality of protrusions 310 may be arranged in a vertical direction inside the venting channel V of the venting unit 300.

According to this embodiment, the flow of the venting gas may be formed in a non-linear manner more easily.

In addition, the venting unit 300 may further include a plate portion 301 and a rim portion 302 as shown in FIGS. 3 and 4.

The plate portion 301 is formed in a plate shape, and may be configured such that the protrusion 310 is positioned on the inner surface. For example, seeing the configuration of the left venting unit 300 shown in FIG. 3, the plate portion 301 may be formed in a plate form erected in the vertical direction, and the protrusion 310 may be positioned on the right surface (surface in the -Y-axis direction) of the plate portion 301.

The rim portion 302 may protrude from the rim of the plate portion 301 toward the outer surface of the module case 200, and may be configured to be coupled to the outer surface of the module case 200. For example, seeing the configuration of the left venting unit 300 shown in FIGS. 3 and 4, the rim portion 302 may protrude in the right direction at the top end (end in the +Z-axis direction), the bottom end (end in the -Z-axis direction) and the front end (end in the +X-axis direction) of the plate portion 301 and be coupled to the left surface of the module case 200. At this time, the rim portion 302 and the module case 200 may be coupled by a welding method. However, the present disclosure is not necessarily limited to this type of coupling, and they may be coupled in various other ways such as bolting or bonding.

According to this configuration of the present disclosure, the structure and shape of the venting unit 300 are simple, so that the venting unit 300 may be manufactured and assembled very easily. In particular, as shown in FIGS. 3 and 4, the venting unit 300 is configured such that one side, namely the right surface, of the venting channel V is completely open, so that the entire open portion may function as an inlet hole Vi of the venting channel V. Therefore, the location of the venting hole H1 may not be greatly affected in the module case 200. That is, according to this configuration, it may be regarded that the inlet hole Vi of the venting channel V is very large, so there is no need to take a great effort to precisely align the inlet hole Vi of the venting unit 300 to the position of the venting hole H1 in the surface of the module case 200.

Moreover, according to this configuration, the process of providing the protrusion 310 in the inner space of the venting channel V may be achieved very easily. In particular, in this configuration, it may be regarded that the protrusion 310 is completely exposed to the outside before the venting unit 300 is attached to the module case 200. Therefore, since the protrusion 310 may be formed through the exposed side, the manufacturing or design process for providing the protrusion 310 in various shapes or arrangements inside the venting channel V may be smoothly performed.

In addition, according to this configuration, if the venting unit 300 having a simple structure is attached to the side surface of the module case 200 in which the venting hole H1 is formed, a venting device may be provided for the battery module very easily. Therefore, in this case, if the venting hole H1 is formed in the module case 200, the battery module according to the present disclosure may be easily implemented even without changing the configuration or design of the corresponding module case 200.

Meanwhile, in this embodiment as described above, the rim portion 302 is not formed on a part of the rim of the plate portion 301, or a part of the rim portion 302 may be formed to have a small protrusion height. For example, seeing the embodiment shown in FIG. 3, among four corners of the plate portion 301 having a rectangular shape, the rim portion 302 may not be formed on at least one corner, for example a rear end corner. In addition, the rim portion 302 may be formed on the remaining three corners among the four corners of the plate portion 301. In this case, the rear end edge of the rectangular plate portion 301 may function as a discharge hole of the venting channel V, as indicated by Vo. In the configuration of this venting unit 300, the left surface, the top surface and the bottom surface of the venting channel V may be closed, and the right surface thereof may be open to function as the inlet hole Vi, and the rear surface may be opened to function as the discharge hole Vo.

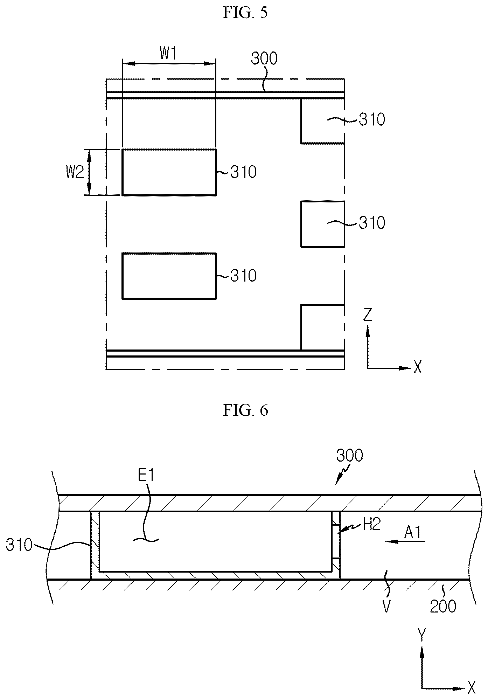

The protrusion 310 may be configured such that a width in the same direction as the flow direction of the venting gas is greater than or equal to a width in a direction orthogonal to the flow direction of the venting gas. This will be described in more detail with reference to FIG. 5.

FIG. 5 is an enlarged view showing the configuration of a portion where the protrusion 310 is formed in the venting unit 300 according to an embodiment of the present disclosure.

Referring to FIG. 5, when the venting unit 300 is viewed from the module case 200, the protrusion 310 may be configured to have a figure shape with a predetermined area such as a square. In particular, with respect to the protrusion 310, assuming that the width in the front and rear direction identical to the flow direction (X-axis direction) of the venting gas is W1 and the width in the vertical direction (Z-axis direction) perpendicular to the flow direction of the venting gas inside the venting channel V is W2, W1 and W2 may establish the following size relationship.

$$W1 \geq W2$$

That is, the protrusion 310 may be configured such that the width in the same direction as the flow direction of the venting gas is equal to or larger than the width in the direction orthogonal to the flow direction of the venting gas.

According to this embodiment of the present disclosure, the protrusion 310 is not deformed even at high pressure of the venting gas and its shape may be stably maintained. That is, when the venting gas flows inside the venting channel V, a high pressure may be applied to the protrusion 310 instantaneously. At this time, according to this configuration, even if a large force is applied due to the gas pressure, the protrusion 310 may maintain its shape stably, so that the function of forming the flow direction of the venting gas non-linearly may be continued.

In addition, according to this configuration, the contact area between the end of the protrusion 310 and the module case 200 may be increased. Therefore, it is possible to prevent spark or discharge from easily leaking into the gap between the end of the protrusion 310 and the module case 200. In addition, in this case, since heat may be better transferred from the module case 200 to the outside of the venting unit 300 through the protrusion 310, the cooling performance of the battery module by the protrusion 310 may be increased.

Moreover, the venting unit 300 may be configured such that an adhesive is interposed between the end of the protrusion 310 and the module case 200. In this case, as in this configuration, when the contact area between the end of the protrusion 310 and the module case 200 is formed to be wide, an adhesive may be interposed more easily.

According to the embodiment in which the adhesive is interposed between the end of the protrusion 310 and the module case 200 as above, the coupling between the venting unit 300 and the module case 200 may be further improved. Moreover, in this case, when the venting unit 300 is brought into contact with the surface of the module case 200 in a state where the adhesive is applied or attached to the end of the protrusion 310, the protrusion 310 and the module case 200 may be fixed to each other. Accordingly, when the rim portion 302 is coupled to the module case 200 by welding or the like, the venting unit 300 may not move, so that the welding process may be performed more smoothly. In addition, according to this configuration, due to the adhesive interposed between the end of the protrusion 310 and the module case 200, it is possible to more reliably prevent sparks or discharges from leaking into such a gap.

Meanwhile, as shown in FIG. 5, the protrusion 310 may be formed in the form of a quadrangular pillar with an approximately rectangular shape when viewed from the front, but such a shape may be implemented in various ways. For example, the protrusion 310 may be formed in a circular, oval, or other polygonal shape when viewed from the front. That is, the protrusion 310 may be formed in the form of a cylinder, an elliptical pillar, or a polygonal pillar. Moreover, when the protrusion 310 is formed in the shape of a polygonal pillar, its corners or vertices may be configured in a rounded shape.

The venting unit 300 may be configured such that an empty space is formed inside the protrusion 310. This will be described in more detail with reference to FIG. 6.

FIG. 6 is a sectional view schematically showing a partial configuration of the venting unit 300 according to an embodiment of the present disclosure. In particular, FIG. 6 may be regarded as a diagram schematically showing the cross-sectional configuration of the protrusion 310 provided in the venting unit 300 when viewed from the top. For several embodiments in this specification, including this embodiment, features identical or similar to other embodiments may not be described in detail, and features different from other embodiments will be described in detail.

Referring to FIG. 6, the protrusion 310 is formed to protrude from the venting unit 300 toward the module case 200, and an empty space may be formed therein, like the portion indicated by E1. In addition, air or the like may exist in the empty space.

According to this configuration of the present disclosure, a heat insulation layer is formed by the empty space E1 inside the protrusion 310, so that heat transfer through the protrusion 310 may be reduced.

In particular, in this embodiment, the protrusion 310 may have a hole formed to communicate with the inner space E1. For example, seeing the embodiment of FIG. 6, as indicated by H2, a hole may be formed in at least one side of the protrusion 310. In this case, the protrusion 310 generally defines the inner space E1, and the inner space E1 may be connected to the venting channel V through the inflow hole H2.

In particular, the inflow hole H2 of the protrusion 310 may be formed in a direction opposite to the direction in which the venting gas flows. For example, in the configuration shown in FIG. 6, when the venting gas flows from the front end to the rear end (-X-axis direction) of the venting unit 300 as indicated by the arrow A1, the inflow hole H2 of the protrusion 310 may be formed on the surface at the front end.

According to this configuration of the present disclosure, the effect of preventing sparks, electrode discharges, carbides, and the like from being discharged by the protrusion 310 may be further increased. For example, as indicated by arrow A1 in FIG. 6, when sparks or electrode discharges move together with the venting gas, sparks or electrode discharges with strong straightness may be introduced into the inner space E1 of the protrusion 310 through the inflow hole H2. In addition, the sparks or electrode discharges introduced into the inner space E1 of the protrusion 310 as described above may be retained in the inner space E1, so that the sparks or electrode discharges may be blocked from being discharged to the outside of the venting unit 300 together with the venting gas.

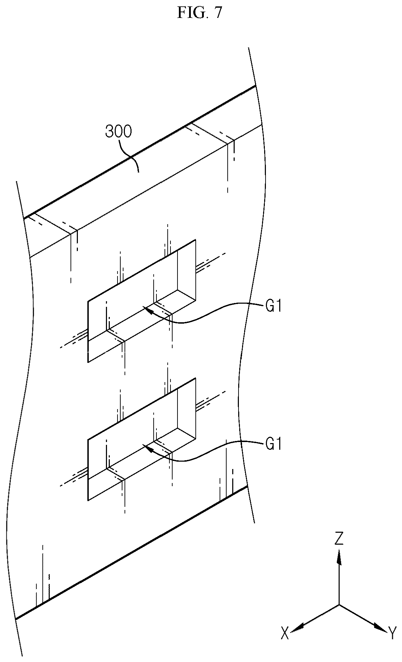

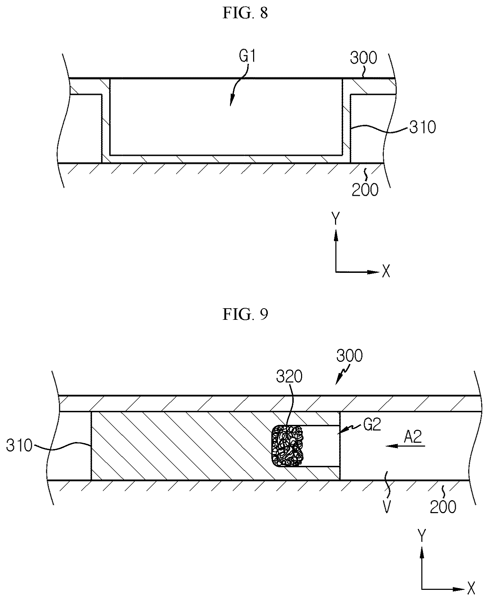

FIG. 7 is a sectional view schematically showing a partial configuration of a venting unit 300 according to another embodiment of the present disclosure. Also, FIG. 8 is a cross-sectional view showing the configuration of the venting unit 300 of FIG. 7 attached to the module case 200, as viewed from the top. In particular, FIG. 8 may be referred to as a modification of the configuration of FIG. 6. This embodiment will also be described in detail based on features different from the former embodiments.

Referring to FIGS. 7 and 8, the outer surface of a portion of the venting unit 300 where the protrusion 310 is formed may be concave toward the outer surface of the module case 200, like the portion indicated by G1. That is, the protrusion 310 may be regarded as being formed in a convex shape toward the outer surface of the module case 200 based on the inner surface of the venting unit 300, but based on the outer surface of the venting unit 300, the module case 200 may be regarded as being formed in a concave shape toward the outer surface. Moreover, since the concave portion G1 of the venting unit 300 may be formed by the protrusion 310 of the venting unit 300, the concave portion G1 may have a shape corresponding to the protrusion 310 of the venting unit 300. For example, the protrusion 310 may be formed in an approximately rectangular shape, and the concave portion G1 formed on the outer surface of the venting unit 300 may also be formed in an approximately rectangular shape accordingly.

According to this configuration of the present disclosure, the configuration for forming the protrusion 310 in the venting unit 300 may be simply implemented. For example, the venting unit 300 is generally formed in the form of a plate, and a plurality of portions in the center are pressed inwardly, so that the protrusion 310 may be formed. In addition, according to this configuration of the present disclosure, the external surface area of the venting unit 300 may be widened. Accordingly, the cooling performance for the venting gas or high-temperature gas discharged from the inside of the module case 200 and flowing through the venting channel V may be improved. In addition, according to this configuration, the heat dissipation performance for the heat transferred from the module case 200 toward the venting unit 300 may be further improved. In particular, when the cooling flow path for cooling the battery module is located outside the venting unit 300, the cooling or heat dissipation efficiency according to this embodiment of the present disclosure may be further increased.

The venting unit 300 may be configured such that a projection or groove is formed on the surface of the protrusion 310. This will be described in more detail with reference to FIGS. 9 to 11.

FIG. 9 is a top cross-sectional view schematically showing the configuration of a protrusion 310 according to another embodiment of the present disclosure. In particular, FIG. 9 may be referred to as a modification of the configuration of FIG. 6. This embodiment will also be described in detail based on features different from the former embodiments.

Referring to FIG. 9, the protrusion 310 of the venting unit 300 may have a groove formed on the side facing the venting gas, as indicated by G2. That is, as indicated by arrow A2 in FIG. 9, when the venting gas flows from the front end to the rear end of the venting unit 300, the groove G2 may be formed on the front surface of the protrusion 310. That is, the groove G2 of the protrusion 310 may be formed on the surface at a side facing the venting gas, namely a side facing the venting hole H1.

According to this configuration of the present disclosure, the flow of the venting gas may be disturbed or the flow direction may be changed by the groove G2 formed in the protrusion 310. In addition, according to this configuration, it is possible to collect particles such as sparks and electrode discharge in the groove G2 formed in the protrusion 310. Therefore, according to this embodiment, the effect of preventing sparks or discharges from leaking to the outside of the venting channel V may be further improved.

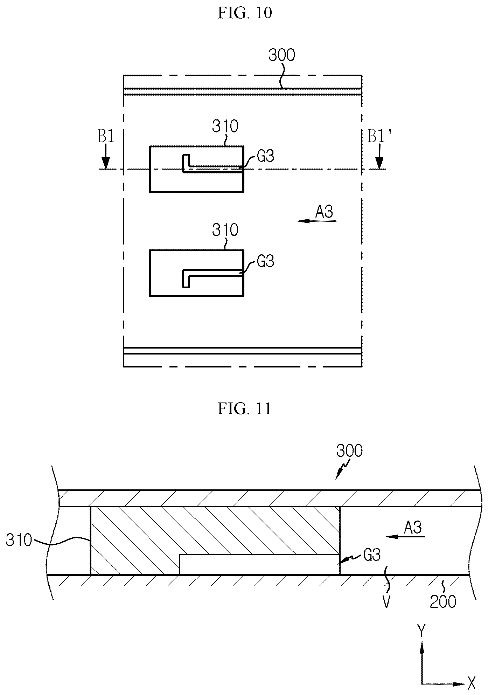

In addition, FIG. 10 is a front view schematically showing a partial configuration of a venting unit 300 having a protrusion 310 according to still another embodiment of the present disclosure. Also, FIG. 11 is a cross-sectional view, taken along the line B1-B1', as viewed from the top, in a state where the venting unit 300 of FIG. 10 is coupled to the module case 200. This embodiment will also be described in detail based on features different from the former embodiments.

Referring to FIGS. 10 and 11, a groove may be formed on the inner end surface of the protrusion 310, namely the end surface of the protrusion 310 facing the module case 200, as indicated by G3. Moreover, the groove G3 may form a certain space between the end of the protrusion 310 and the outer surface of the module case 200. In particular, the opening of the groove G3 may be formed at a side facing the venting gas in the protrusion 310. That is, in the configuration of FIGS. 10 and 11, when the venting gas flows from the front end to the rear end as indicated by the arrow A3, the groove G3 of the protrusion 310 may be formed to extend backward by a predetermined length from the front end in the inner end surface of the protrusion 310 directly facing the venting gas. However, as shown in FIGS. 10 and 11, the groove G3 of the protrusion 310 does not extend to the rear end of the protrusion 310 and may be configured to stop at a predetermined portion. That is, the groove G3 formed at the end of the protrusion 310 may be concave to a predetermined point rather than penetrating the protrusion 310. Moreover, the groove G3 of the protrusion 310 may be configured such that the rear end is bent in a direction orthogonal to the flow direction of the venting gas, namely in the upper direction (+Z-axis direction) or the lower direction (-Z-axis direction).

According to this configuration of the present disclosure, by the groove G3 formed on the inner end surface of the protrusion 310, sparks or discharges that move together with the venting gas may be collected, so that it is possible to more effectively suppress the sparks or discharges from being discharged to the outside of the venting channel V. In particular, according to this configuration, the effect of collecting sparks or discharges introduced into the gap between the inner end surface of the protrusion 310 and the module case 200 in the groove G3 may be improved.

In addition, as shown in FIG. 9, the venting unit 300 may further include a porous member 320. The porous member 320 may be configured to have a plurality of pores therein. In particular, the internal pores may be configured to communicate with the outside. That is, the pores held in the porous member 320 may be regarded as an empty space filled with only gas, and the pores may not be sealed, but be configured to communicate with the outside. For example, the porous member 320 may be configured in a form in which a plurality of wires, particularly a plurality of wires made of a material such as a metal or a polymer, are entangled with each other. In particular, the porous member 320 may be configured to be inserted into the groove G2 of the protrusion 310.

According to this configuration of the present disclosure, sparks or discharges that come into contact with the surface of the protrusion 310 or that are introduced into the groove G2 of the protrusion 310 are captured by the porous member 320, so that it is possible to more reliably block the sparks or discharges from being discharged to the outside of the venting channel V.

In addition, although not shown in the drawings, a projection may be formed on the surface of the protrusion 310. In particular, the projection may be formed in a form that obstructs the flow direction of the venting gas flowing on the surface of the protrusion 310. For example, the projection may be configured to create a disturbance or vortex for the flow of the venting gas flowing along the surface of the protrusion 310. In this case, it is possible to further suppress sparks or discharges from being discharged to the outside.

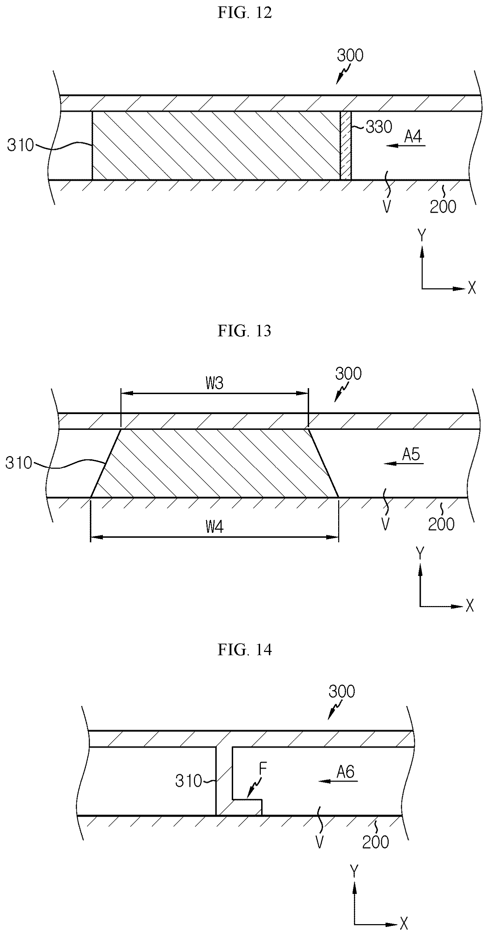

FIG. 12 is a top cross-sectional view schematically showing a partial configuration in which a venting unit 300 according to still another embodiment of the present disclosure is coupled to the module case 200. This embodiment will also be described in detail based on features different from the former embodiments.

Referring to FIG. 12, the venting unit 300 may further include an adhesive member 330. The adhesive member 330 is made of an adhesive material and may be positioned on the inner surface of the venting channel V. Here, the adhesive member 330 may be made of only an adhesive material, or may be configured in the form of an adhesive tape having an adhesive material on the surface of the substrate.

In particular, the adhesive member 330 may be configured to be positioned on the side surface of the protrusion 310 facing the venting gas. For example, when the venting gas flows from the front end to the rear end as indicated by the arrow A4, the adhesive member 330 may be attached to the surface at the front end of the protrusion 310 to face the venting gas. In this case, the direction of the surface the adhesive member 330 may be orthogonal to the flow direction of the venting gas. Here, the adhesiveness of the adhesive member 330 may be continuously expressed in a normal state, or may be expressed only in a high temperature situation such as a situation where the venting gas flows.

According to this embodiment of the present disclosure, by the adhesiveness of the adhesive member 330, particulates contained in the venting gas, such as sparks or discharges, may be better captured. Therefore, in this case, the effect of suppressing sparks or discharges from being discharged to the outside of the venting channel V may be further improved.

Meanwhile, the embodiment of FIG. 12 has been described based on the configuration in which the adhesive member 330 is formed on the surface of the protrusion 310 facing the venting hole, for example the surface at the front end of the protrusion 310. However, the adhesive member 330 may also be formed on another surface of the protrusion 310, such as the upper surface and/or the lower surface of the protrusion 310.

FIG. 13 is a top cross-sectional view schematically showing a partial configuration in which a venting unit 300 according to still another embodiment of the present disclosure is coupled to the module case 200. This embodiment will also be described in detail based on features different from the former embodiments.

Referring to FIG. 13, in the venting unit 300, the protrusion 310 may be configured to have a width that gradually increases toward the inner end. That is, as shown in FIG. 13, when the width of the outer end of the protrusion 310 is W3 and the width of the inner end of the protrusion 310 is W4, W4 may be larger than W3. That is, the protrusion 310 may be configured to increase in width from the outer side to the inner side.

According to this embodiment of the present disclosure, it is possible to prevent the protrusion 310 from being deformed even by high pressure of the venting gas. In particular, in this configuration, since the contact area between the inner end of the protrusion 310 and the module case 200 is large, even when the venting gas flows, the end of the protrusion 310 may stably supported by the surface of the module case 200 and may not be deformed. For example, as indicated by the arrow A5, when the venting gas flows, the protrusion 310 may receive a force in the A5 direction. However, since the inner end of the protrusion 310 is in contact with the outer surface of the module case 200 over a large surface area, the protrusion 310 may not be easily bent in the A5 direction. Therefore, in this case, the venting control configuration by the protrusion 310 of the venting unit 300 may be continuously maintained.

FIG. 14 is a top cross-sectional view schematically showing a partial configuration in which a venting unit 300 according to still another embodiment of the present disclosure is coupled to the module case 200. This embodiment will also be described in detail based on features different from the former embodiments.

Referring to FIG. 14, the protrusion 310 of the venting unit 300 may be configured in a substantially plate shape, unlike the former various embodiments. At this time, at least one of both wide surfaces of the plate-shaped protrusion 310 may be configured to face the flow direction of the venting gas. For example, as indicated by the arrow A6 in FIG. 14, when the venting gas flows in a direction from the front to the rear of the battery module, one surface of the protrusion 310 may be configured to face forward and the other surface of the protrusion 310 may be configured to face rearward.

In addition, as indicated by F in FIG. 14, the end of the protrusion 310 at a side facing the outer surface of the module case 200 may be configured to extend in a direction facing the flow direction of the venting gas, namely in a direction toward the venting hole H1.

According to this configuration of the present disclosure, when the venting gas flows inside the venting unit 300 in a state where the venting unit 300 is coupled to the module case 200, the protrusion 310 may not be pushed back even at the high pressure of the venting gas, and may contact the surface of the module case 200 stably. Moreover, in this embodiment, by increasing the contact area between the protrusion 310 and the module case 200, the bonding and heat transfer between the protrusion 310 and the module case 200 may be further improved. In particular, in this case, by interposing an adhesive between the protrusion 310 and the module case 200, the configuration that further increases the bonding force between the protrusion 310 and the module case 200 may be more easily implemented.

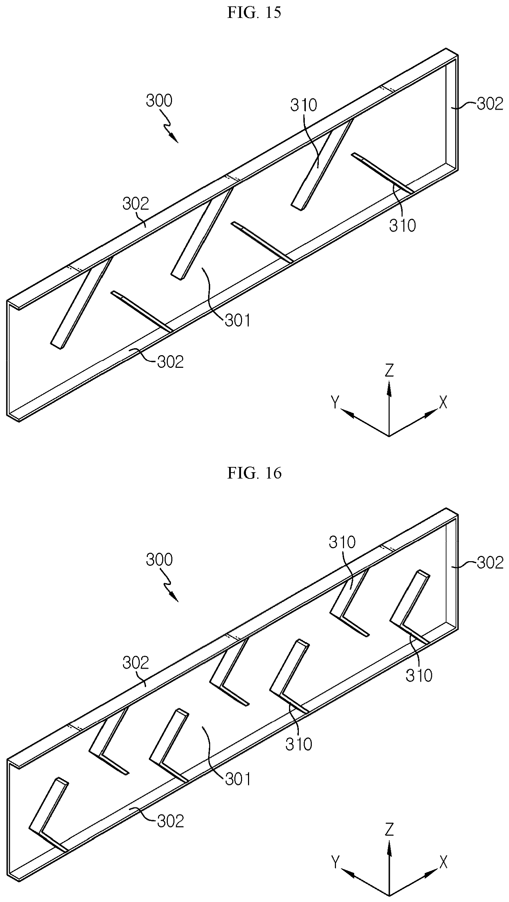

FIGS. 15 and 16 are perspective views schematically showing the configuration of venting units 300 according to other various embodiments of the present disclosure. This embodiment will also be described in detail based on features different from the former embodiments.

First, referring to FIG. 15, each of the plurality of protrusions 310 may be formed in a plate shape. That is, in the former several embodiments, when looking at the venting unit 300 from the module case 200, the configuration of the protrusion 310 having a three-dimensional shape such as a rectangle has been mainly described, but the protrusion 310 may also be configured in a form having a straight shape. In particular, the protrusion 310 may be configured such that some corners are fixed to the plate portion 301 and the rim portion 302, and the other corners are not fixed in the venting unit 300. At least some of the other corners of the protrusion 310 that are not fixed in the venting unit 300 as above may be configured to contact the surface of the module case 200 when the venting unit 300 is coupled to the module case 200. Moreover, the plate-shaped protrusion 310 may be configured to be inclined at a predetermined angle from the direction of the rim portion 302, as shown in FIG. 15. According to this configuration of the present disclosure, with a relatively simple structure, the effect of suppressing sparks or discharges from being discharged may be secured.

In addition, referring to FIG. 16, the protrusion 310 may be configured in a plate shape, and a predetermined portion thereof may be configured in a bent shape. That is, when looking at the opened inlet hole of the venting unit 300 from the module case 200, the protrusion 310 may be configured in a shape having a bent straight shape. Moreover, the bent linear protrusion 310 may be arranged in plural such that the plurality of bent linear protrusions 310 are spaced apart from each other by a predetermined distance along the flow direction of the venting gas, for example in the front and rear direction (X-axis direction) of the module case 200. In addition, a plurality of bent linear protrusions 310 may be disposed to be spaced apart from each other by a predetermined distance along a direction orthogonal to the flow direction of the venting gas, for example in the vertical direction (Z-axis direction) of the module case 200. According to this configuration of the present disclosure, through the bent shape of the protrusion 310, the effect of collecting sparks or discharges contained in the venting gas may be further improved.

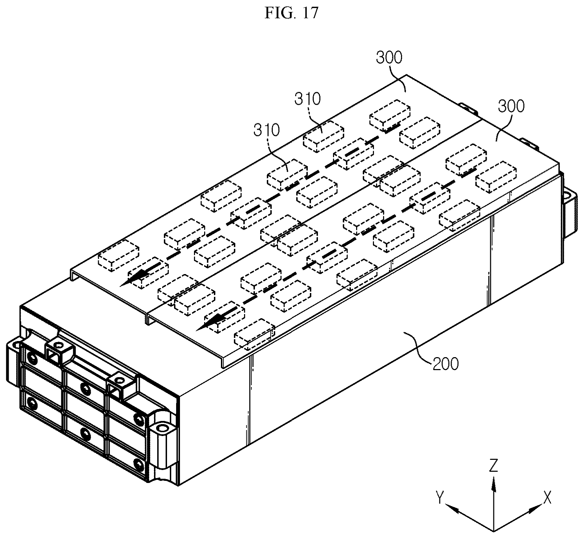

FIG. 17 is a perspective view schematically showing the configuration of a battery module according to another embodiment of the present disclosure. This embodiment will also be described in detail based on features different from the former embodiments.

Referring to FIG. 17, the venting unit 300 may be coupled to the upper portion of the module case 200. In this case, the protrusion 310 may be provided on the inner surface of the venting unit 300. In particular, when the venting hole H1 is located on the upper surface of the module case 200, the venting unit 300 may be attached to the upper portion of the module case 200 to correspond to the position of the venting hole H1. Moreover, when the venting hole H1 is formed on the left and right sides of the upper surface of the module case 200, respectively, the venting unit 300 may be attached to the left and right sides, respectively, on the upper portion of the module case 200 as shown in FIG. 17. At this time, when the venting gas is discharged from the venting hole H1, the venting gas may be discharged as indicated by the arrows in FIG. 17.

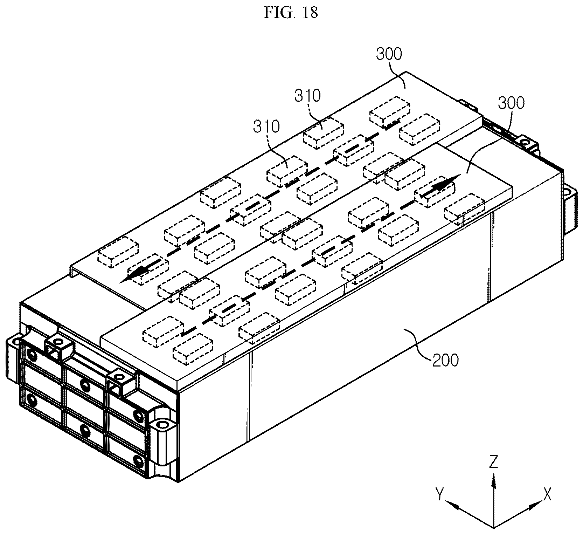

FIG. 18 is a perspective view schematically showing the configuration of a battery module according to still another embodiment of the present disclosure. This embodiment will also be described in detail based on features different from the former embodiments.

Referring to FIG. 18, two venting units 300 are coupled to the left and right sides on the upper surface of the module case 200, respectively, and the venting directions of the venting units 300 may be opposite to each other. That is, the venting direction of the venting unit 300 provided at the left side on the upper surface of the module case 200 may be configured to face the rear, and the venting direction of the venting unit 300 provided at the right side on the upper surface of the module case 200 may be configured to face the front.

According to this embodiment of the present disclosure, since the venting directions of the plurality of venting units 300 are different, it is possible to disperse the venting gas so that the venting gas is not concentrated on a specific portion. Therefore, in this case, it is possible to prevent a specific part from being overheated due to the concentration of the venting gas.

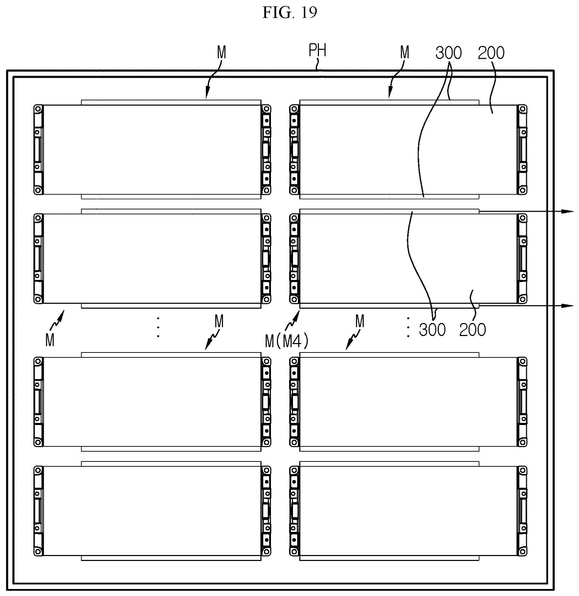

FIG. 19 is a diagram schematically showing a battery pack according to an embodiment of the present disclosure, as viewed from the top. Regarding this embodiment, features identical or similar to the former embodiments will not be described in detail.

Referring to FIG. 19, the battery pack according to the present disclosure may include one or more battery modules M according to the present disclosure. In particular, in order to increase capacity and/or output, the battery pack according to the present disclosure may include a plurality of battery modules M according to the present disclosure. In this case, the various configurations described above may be applied to each battery module M. For example, each battery module M includes a cell assembly 100, a module case 200, and a venting unit 300. In addition, the plurality of battery modules M may be accommodated inside a pack housing PH.

In the case of the battery pack according to the present disclosure, even if a thermal event occurs in a specific battery module, safety may be secured to a certain level or above. In particular, the battery module M included in the battery pack according to the present disclosure may include the venting unit 300, and the venting gas may be discharged as indicated by the arrow through the venting unit 300. Accordingly, by preventing ignition factors such as sparks, electrode discharges and carbides from being included as much as possible in the venting gas discharged to the outside, it is possible to prevent ignition from occurring in other battery modules M as well as the periphery of the corresponding battery module M.

Moreover, in the case of the battery pack according to the present disclosure, the venting direction may be controlled through the venting unit 300 included in each battery module, so that the venting gas may not be directly injected toward other battery modules. For example, as shown in FIG. 19, when a plurality of battery modules M are arranged in two rows, namely a left row and a right row, in the pack housing, the injection direction of the venting unit 300 is directed to the left for the battery modules M in the left row, and the injection direction of the venting unit 300 may be directed to the right for the battery modules M in the right rows. In this case, when the venting gas is discharged from a specific battery module, for example M4, the venting gas is directed to other battery modules, and thus it is possible to more effectively prevent the thermal event from spreading to other battery modules by the venting gas.

In addition, although not shown in the drawings, the battery pack according to the present disclosure may further include other various components, for example components of the battery pack such as a BMS, a bus bar, a relay, and a current sensor known in the art at the time of filing of this application, in addition to the battery module M or the pack housing PH.

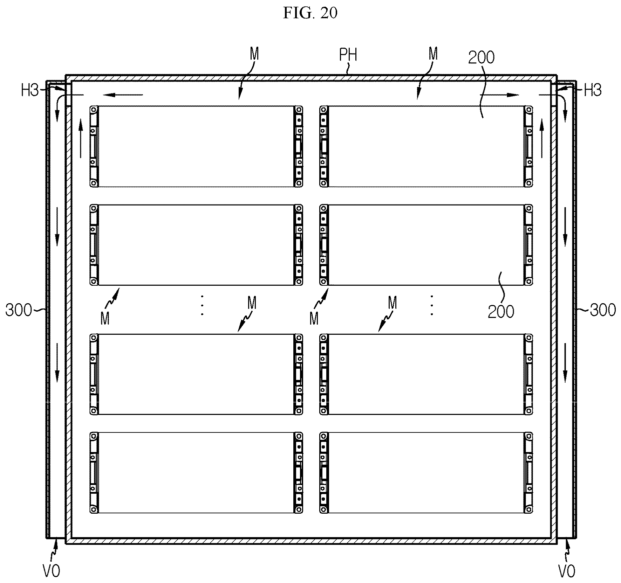

Meanwhile, in the various embodiments described above, the venting unit 300 applied to the battery module may also be applied to the battery pack. This will be further described with reference to FIG. 20.

FIG. 20 is a diagram showing a battery pack according to another embodiment of the present disclosure, as viewed from the top. For example, FIG. 20 may be regarded as showing the internal configuration of the battery pack according to the present disclosure in a state where the upper portion of the pack housing PH is removed. This embodiment will also be described in detail based on features different from the former embodiments.

Referring to FIG. 20, a hole may be formed in at least one side of the pack housing PH in which the plurality of battery modules M are accommodated, as indicated by H3. The pack hole H3 may be formed such that the inner space of the pack housing PH communicates with the outer space. In particular, the pack hole H3 may function as a passage through which gas or the like existing in the inner space of the pack housing PH is discharged to the outside.

In this configuration, the pack housing PH may be equipped with the venting unit 300 according to the present disclosure described above. In particular, as shown in FIG. 20, when the pack hole H3 is formed in the pack housing PH, the venting unit 300 may be attached to a portion where the pack hole H3 is formed, at the outer side of the pack housing PH.

That is, the battery pack according to this embodiment of the present disclosure may include at least one battery module M, a pack housing PH configured to accommodate the at least one battery module M in an inner space thereof and having a pack hole H3 formed therein, and a venting unit 300 mounted to the pack housing PH and having a venting channel V so that the venting gas discharged from the pack hole H3 may be introduced therein and discharged to the outside, the venting unit 300 having a protrusion 310 configured to protrude from the inside of the venting channel V toward the outer surface of the pack housing PH.

In this case, the venting gas generated from any battery module M may pass through the pack hole H3 as indicated by an arrow in FIG. 20 and flow into the venting unit 300 located outside the pack housing PH. Then, as described above, it is possible to suppress sparks, electrode discharges, carbides, or the like from being discharged to the outside by the venting unit 300.

As in this embodiment, in the configuration in which the venting unit 300 is mounted to the pack housing PH, several embodiments of the venting unit 300 described above as being mounted to the module case 200 may be applied identically or similarly to the venting unit 300.

Meanwhile, as shown in FIG. 20, the venting unit 300 may not be included in each battery module M. However, it is also possible that the venting unit 300 is separately attached to each battery module M as shown in FIG. 19.

In addition, in the embodiment of FIG. 20, the cell assembly 100 is accommodated in the module case 200 and provided inside the pack housing PH in a modular form. However, in the battery pack according to still another embodiment of the present disclosure, the cell assembly 100 may not be accommodated in the module case 200, but may be directly mounted to the pack housing PH in a cell-to-pack form. In this case, the battery module M described above may include only the cell assembly 100 without including the module case 200. Meanwhile, in the inner space of the pack housing PH, a control device such as a BMS (Battery Management System) and electrical components such as a relay and a current sensor may be accommodated together.

The battery module according to the present disclosure or the battery pack according to the present disclosure may be applied to a vehicle such as an electric vehicle or a hybrid electric vehicle. That is, the vehicle according to the present disclosure may include the battery module according to the present disclosure or the battery pack according to the present disclosure. In addition, the vehicle according to the present disclosure may further include various other components included in a vehicle in addition to the battery module or the battery pack. For example, the vehicle according to the present disclosure may further include a vehicle body, a motor, a control device such as an electronic control unit (ECU), and the like in addition to the battery module according to the present disclosure.

Meanwhile, in this specification, terms indicating directions such as "up", "down", "left", "right", "front" and "rear" used, but these terms are merely for convenience of description and may vary depending on the location of an object or the location of an observer, as apparent to those skilled in the art.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

Reference Signs

100: cell assembly
200: module case
300: venting unit
301: plate portion, 302: rim portion
310: protrusion
320: porous member
330: adhesive member
V: venting channel
Vi: inlet hole, Vo: discharge hole
H1: venting hole
H2: inflow hole
M: battery module
PH: pack housing
H3: pack hole

In view of the above, the present invention can be implemented according to the following itemized examples.

ITEM 1. A battery module, comprising:

a cell assembly having at least one battery cell;
a module case configured to accommodate the cell assembly in an inner space thereof and having a venting hole formed therein to discharge a venting gas generated from the cell assembly; and
a venting unit provided at an outer side of the module case and having a venting channel so that the venting gas discharged from the venting hole is introduced therein and discharged to the outside, the venting unit having a protrusion configured to protrude toward an outer surface of the module case from the inside of the venting channel.

ITEM 2. The battery module according to ITEM 1, wherein a plurality of protrusions are arranged along a flow direction of the venting gas.

ITEM 3. The battery module according to ITEM 1, wherein the venting unit further includes a plate portion formed in a plate shape so that the protrusion is located on an inner surface thereof, and a rim portion protruding from a rim of the plate portion toward the outer surface of the module case and coupled to the outer surface of the module case.

ITEM 4. The battery module according to ITEM 1, wherein the protrusion is configured such that the width in the same direction as a flow direction of the venting gas is greater than or equal to the width in a direction orthogonal to the flow direction of the venting gas.

ITEM 5. The battery module according to ITEM 1, wherein the venting unit has an empty space formed inside the protrusion.

ITEM 6. The battery module according to ITEM 1, wherein the venting unit is configured such that the outer surface of a portion where the protrusion is formed is concave toward the outer surface of the module case.

ITEM 7. The battery module according to ITEM 1, wherein the venting unit has a projection or groove formed on the surface of the protrusion.

ITEM 8. The battery module according to ITEM 1, wherein the venting unit further includes an adhesive member having a material with an adhesive property and positioned on an inner surface of the venting channel.

ITEM 9. The battery module according to ITEM 1, wherein the protrusion is configured to have a width that gradually increases toward an inner end.

ITEM 10. A battery pack, comprising the battery module according to any one of ITEMs 1 to 9.

ITEM 11. A battery pack, comprising:

at least one battery module; a pack housing configured to accommodate the at least one battery module in an inner space thereof and having a pack hole formed therein; and a venting unit mounted to the pack housing and having a venting channel so that a venting gas discharged from the pack hole is introduced therein and discharged to the outside, the venting unit having a protrusion configured to protrude toward an outer surface of the pack housing from the inside of the venting channel.

ITEM 12. A vehicle, comprising the battery module according to any one of ITEMs 1 to 9.

## Claims

1. A battery pack, comprising:

a cell assembly having a plurality of secondary batteries stacked; a battery management system; a pack housing configured to accommodate the cell assembly and the battery management system in an inner space thereof and having a pack hole formed therein to discharge a venting gas generated from the cell assembly; and a venting unit provided at an outer side of the pack housing and having a venting channel so that the venting gas discharged from the pack hole is introduced therein and discharged to the outside, the venting unit having a protrusion configured to protrude toward an outer surface of the pack housing from the inside of the venting channel.

2. The battery pack according to claim 1, wherein a plurality of protrusions are arranged along a flow direction of the venting gas.

3. The battery pack according to claim 1, wherein the venting unit further includes a plate portion formed in a plate shape so that the protrusion is located on an inner surface thereof, and a rim portion protruding from a rim of the plate portion toward the outer surface of the pack housing and coupled to the outer surface of the pack housing.

4. The battery pack according to claim 1, wherein the protrusion is configured such that the width in the same direction as a flow direction of the venting gas is greater than or equal to the width in a direction orthogonal to the flow direction of the venting gas.

5. The battery pack according to claim 1, wherein the venting unit has an empty space formed inside the protrusion.

6. The battery pack according to claim 1, wherein the venting unit is configured such that the outer surface of a portion where the protrusion is formed is concave toward the outer surface of the pack housing.

7. The battery pack according to claim 1, wherein the venting unit has a projection or groove formed on the surface of the protrusion.

8. The battery pack according to claim 1, wherein the venting unit further includes an adhesive member having a material with an adhesive property and positioned on an inner surface of the venting channel.

9. The battery pack according to claim 1, wherein the protrusion is configured to have a width that gradually increases toward an inner end.

**10.** A vehicle, comprising the battery pack according to any one of claims 1 to 9.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17

FIG. 18

FIG. 19

FIG. 20

| | Europäisches Patentamt European Patent Office Office européen des brevets | **EUROPEAN SEARCH REPORT** | **Application Number** EP 25 19 5899 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 2 475 028 A1 (PANASONIC CORP [JP]) 11 July 2012 (2012-07-11) * the whole document * ----- | 1-10 | INV. H01M50/358 H01M50/383 H01M50/249 |
| A | WO 2020/153018 A1 (SANYO ELECTRIC CO [JP]) 30 July 2020 (2020-07-30) * the whole document * ----- | 1-10 | H01M10/6566 H01M10/613 H01M10/625 H01M50/367 |
| A | EP 3 731 301 A1 (CONTEMPORARY AMPEREX TECHNOLOGY CO LTD [CN]) 28 October 2020 (2020-10-28) * the whole document * ----- | 1-10 | H01M50/211 |

TECHNICAL FIELDS
SEARCHED (IPC)

H01M

The present search report has been drawn up for all claims

| Place of search | Date of completion of the search | Examiner |
|---|---|---|
| Munich | 2 February 2026 | Nogueira da Silva, A |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................................................

& : member of the same patent family, corresponding
    document

EPO FORM 1503 03.82 (P04C01)

EP 4 712 245 A1

## ANNEX TO THE EUROPEAN SEARCH REPORT
## ON EUROPEAN PATENT APPLICATION NO.

EP 25 19 5899

This annex lists the patent family members relating to the patent documents cited in the above-mentioned European search report.
The members are as contained in the European Patent Office EDP file on
The European Patent Office is in no way liable for these particulars which are merely given for the purpose of information.

02-02-2026

| Patent document cited in search report | | Publication date | Patent family member(s) | | Publication date |
|---|---|---|---|---|---|
| EP 2475028 | A1 | 11-07-2012 | CN | 102473884 A | 23-05-2012 |
| | | | EP | 2475028 A1 | 11-07-2012 |
| | | | JP | 5466906 B2 | 09-04-2014 |
| | | | JP | 2011065906 A | 31-03-2011 |
| | | | KR | 20120090027 A | 16-08-2012 |
| | | | US | 2012164490 A1 | 28-06-2012 |
| | | | US | 2014113167 A1 | 24-04-2014 |
| | | | US | 2015140369 A1 | 21-05-2015 |
| | | | WO | 2011033713 A1 | 24-03-2011 |
| WO 2020153018 | A1 | 30-07-2020 | CN | 113302775 A | 24-08-2021 |
| | | | EP | 3916866 A1 | 01-12-2021 |
| | | | JP | 7489330 B2 | 23-05-2024 |
| | | | JP | WO2020153018 A1 | 02-12-2021 |
| | | | US | 2022123428 A1 | 21-04-2022 |
| | | | WO | 2020153018 A1 | 30-07-2020 |
| EP 3731301 | A1 | 28-10-2020 | CN | 209691818 U | 26-11-2019 |
| | | | EP | 3731301 A1 | 28-10-2020 |
| | | | JP | 7247360 B2 | 28-03-2023 |
| | | | JP | 2022522745 A | 20-04-2022 |
| | | | US | 2020343494 A1 | 29-10-2020 |
| | | | WO | 2020215989 A1 | 29-10-2020 |

REFERENCES CITED IN THE DESCRIPTION

**Patent documents cited in the description**

- KR 1020210090554